# EUROPEAN PATENT SPECIFICATION

(11) **EP 3 538 364 B1**
(45) Date of publication and mention of the grant of the patent: **14.10.2020**
(21) Application number: 17793973.3
(22) Date of filing: 08.11.2017
(51) Int. Cl.: B32B 27/32, B32B 27/08, B32B 27/18, B32B 7/02, B32B 7/04, B32B 7/00, B32B 7/10, B32B 27/00, B32B 27/06

(54) **MULTI-LAYER FILM**
MEHRSCHICHTIGE FILM
MULTI-COUCHE FILM

(30) Priority: 09.11.2016 EP 16197954
(43) Date of publication of application: 18.09.2019
(73) Proprietor: SABIC Global Technologies B.V., 4612 PX Bergen op Zoom (NL)
(72) Inventor: BACCARO, Lucio, 6160 GA Geleen (NL); SCALA, Attilio, 6160 GA Geleen (NL); POULET, Estelle, Julie, Mathilde, 6160 GA Geleen (NL); VAN DEN ESSCHERT, Bart, 6160 GA Geleen (NL)
(74) Representative: Sabic Intellectual Property Group
(86) International application number: PCT/EP2017/078575
(87) International publication number: WO 2018/087130

(56) References cited:
- WO-A1-2016/156293
- US-B1- 6 265 055
- US-B2- 6 749 948

## Description

The invention relates to a multi-layer film for cling film applications, an article comprising said film, the use of said film and to a process for the preparation of said film.

Films for cling film application may be used to seal and protect food.

Cling film was first made out of polyvinylchloride (PVC). Alternatives made of low density polyethylene (LDPE) optionally combined to linear low density polyethylene (LLDPE) or ethylene vinyl acetate (EVA) to improve cling and/or tensile strength are also available.

US6265055 discloses a multi-layer stretch cling film.

However, despite previous research in the field, there is always a continuous need for films with good cling performance, while being easy to cut and/or having good machinability.

Therefore, it is the object of the invention to provide multi-layer films having good cling performance, preferably similar to PVC cling film, and/or being easy to cut and/or having good machinability.

This object is achieved by a multi-layer film for cling film applications comprising at least three layers, with two outer layers, at least one core layer, preferably exactly one core layer, wherein at least one or both outer layer(s) comprise(s) between 73 wt. % and 99.5 wt. % or between 73 wt. % and < 99.5 wt. % of LLDPE based on the total weight of the respective layer and between 0.5 wt. % and 7 wt. % of HDPE based on the total weight of the respective layer and optionally between 0 and 20 wt % of at least one anti-fog agent based on the total weight of the respective layer. This may contribute to reduce the coefficient of friction and thus to improve machinability, especially in a durable way and/or in a way that minimizes any leakage of substances from the film.

The components of each layer according to the invention may preferably add up to 100 wt. % of the respective layer.

The multi-layer film according to the invention may thereby show good cling performance, preferably similar to PVC cling film, and/or being easy to cut and/or having good machinability. Good machinability may thereby mean that film has the required mechanical properties to be used especially in fast wrappers.

With outer layers are meant the layers that are located on the outside of the film. The outer layers may thus preferably adjacent to only one other layer of the multi-layer film according to the invention on only one of their sides. As compared to other layers in the multi-layer film of the invention, the outer layers have a substantially larger portion of the layer that faces the outside. With core layer is meant a layer that is located between at least two outer layers and/or at least two intermediate layers, preferably in the middle of the multi-layer arrangement of the multi-layer film according to the invention film with at least three or exactly three layers. Intermediate layer may thereby designate a layer that is located between at least one outer layer and at least one core layer. An intermediate layer may thereby be adjacent to at least outer layer and/or at least one core layer.

With adjacent layer, as used herein, is meant a layer that is in direct contact with the layer to which it is described as adjacent. Each adjacent layer to an outer layer, would therefore be in direct contact with that outer layers. A layer adjacent to at least one outer layer may thereby be for example a core layer or an intermediate layer.

The multi-layer film according to the present invention may preferably comprise exactly three layers, especially exactly two outer layer and/or exactly one core layer. A multi-layer film according to the invention may comprise at least one, preferably exactly one, core layer.

The outer layers of the multi-layer film according to the invention may be different or identical. Preferably, both outer layers may be identical (e.g. comprise all the same components in the same amounts) and/or comprise the same linear low density polyethylene. However, it is also possible that outer layers comprise different materials and/or a different linear low density polyethylene.

The amount of linear low density polyethylene (LLDPE) in at least one or in both of the outer layer(s) may be preferably between 73 and 99.5 wt. % or 73 and 99 wt. % based on the total weight of the respective layer, between 73.5 and 98.9 wt. % based on the total weight of the respective layer, between 75 and 98.8 wt. % based on the total weight of the respective layer, between 76.5 and 98.7 wt. % based on the total weight of the respective layer, between 77 and 98.5 wt. % based on the total weight of the respective layer, more preferably between 77.5 and 98 wt. % based on the total weight of the respective layer.

The amount of high density polyethylene (HDPE) in at least one or in both of the outer layer(s) may be preferably between 0.5 and 7 wt. % based on the total weight of the respective layer, between 0.6 and 6.5 wt. % based on the total weight of the respective layer, between 0.7 and 5 wt. % based on the total weight of the respective layer, between 0.8 and 3.5 wt. % based on the total weight of the respective layer, between 1 and 3 wt. % based on the total weight of the respective layer, between 1.5 and 2.5 wt. % based on the total weight of the respective layer.

At least one or both outer layer(s) of the multi-layer film of the invention may comprise other components besides polyethylene and/or linear low density polyethylene. For example, at least one or both outer layer(s) may further comprise additives, especially for example additives as described herein.

The production processes of LDPE, HDPE and LLDPE are summarized in Handbook of Polyethylene by Andrew Peacock (2000; Dekker; ISBN 0824795466) at pages 43-66. The catalysts can be divided in three different subclasses including Ziegler Natta catalysts, Phillips catalysts and single site catalysts. The latter class is a family of different classes of compounds, metallocene catalysts being one of them. As elucidated at pages 53-54 of said Handbook a Ziegler-Natta catalyzed polymer is obtained via the interaction of an organometallic compound or hydride of a Group I-III metal with a derivative of a Group IV-VIII transition metal. An example of a (modified) Ziegler-Natta catalyst is a catalyst based on titanium tetra chloride and the organometallic compound triethylaluminium. A difference between metallocene catalysts and Ziegler Natta catalysts is the distribution of active sites. Ziegler Natta catalysts are heterogeneous and have many active sites. Consequently polymers produced with these different catalysts will be different regarding for example the molecular weight distribution and the comonomer distribution.

With linear low density polyethylene (LLDPE) as used herein is meant a low density polyethylene copolymer comprising ethylene and a C3- C10 alpha-olefin co monomer

(ethylene-alpha olefin copolymer). Suitable alpha-olefin co monomers include 1-butene, 1-hexene, 4-methyl pentene and 1-octene. The preferred co monomer is 1-hexene. Preferably, the alpha-olefin co monomer may be present for example in an amount of about 1 to about 25, preferably 5 to about 20 percent by weight of the ethylene-alpha olefin copolymer, preferably of 5 to about 20 percent by weight of the ethylene-alpha olefin copolymer, more preferably an amount of from about 7 to about 15 percent by weight of the ethylene-alpha olefin copolymer. LLDPE, as used herein, may be produced for example using metallocene and/or Ziegler-Natta catalysts.

Preferably, the linear low density polyethylene (LLDPE) for example has a density between 0.850 g/cm³ and 0.945 g/ cm³, preferably between 0.900 to 0.934 g/cm³, more preferably between 0.905 to 0.920 g/cm³. For purpose of the invention, the density is determined using ISO1872-2. The density of LLDPE in the core layer may thereby be for example equal or higher than the density of LLDPE in at least one or both of the outer layers.

Preferably, the linear low density polyethylene in at least one or in both of the outer layers and/or in the core layer may be a copolymer of ethylene and 1-octene. Preferably, the linear low density polyethylene in at least one or in both of the outer layers and/or in the core layer may be produced using a Ziegler-Natta catalyst or a metallocene catalyst.

The technologies suitable for the LLDPE manufacture include but are not limited to gas- phase fluidized-bed polymerization, polymerization in solution, and slurry polymerization.

According to a preferred embodiment of the present invention the LLDPE has been obtained by gas phase polymerization in the presence of a Ziegler-Natta catalyst. According to another preferred embodiment, the LLDPE may be obtained by gas phase polymerization in the presence of a metallocene catalyst.

A core layer of a multi-layer film according to the invention may comprise at least one polyolefin and/or blends of two or more polyolefin, especially one or more polyethylene(s), like for example high density polyethylene (HDPE), low density polyethylene (LDPE) and/or linear low density polyethylene (LLDPE).

A core layer of a multi-layer film according to the invention may for example comprise between > 50 and 89.5 wt. % based on the total weight of the respective layer, preferably between 55 and 89.5 wt. % based on the total weight of the respective layer, preferably between 61 and 89 wt. % based on the total weight of the respective layer, further preferred between 62 and 85 wt. % based on the total weight of the respective layer, further preferred between 64 and 77 wt. % based on the total weight of the respective layer, further preferred between 65 and 75 wt. % based on the total weight of the respective layer of LLDPE, preferably of at least one or of exactly one LLDPE.

A core layer of a multi-layer film according to the invention may for example comprise between 10 and 30 wt. % based on the total weight of the respective layer, preferably between 10.5 and 27 wt. % based on the total weight of the respective layer, further preferred between 14.5 and 26 wt. % based on the total weight of the respective layer, further preferred between 13 and 27 wt. % based on the total weight of the respective layer, further preferred between 15 and 25 wt. % based on the total weight of the respective layer of LDPE, preferably of at least one or of exactly one LDPE.

Preferably, the melt flow index of the linear low density polyethylene in at least one or both of the outer layer(s) and/or in the core layer may range for example from 0.1 to 5 g/10min, for example from 0.2 to 4 g/10min, for example from 0.3 to 3 g/10min, for example from 0.4 to 2 g/10min, for example from 0.5 to 1.5 g/10min. For purpose of the invention, the melt flow index is determined herein using ISO1133:2011 (190°C/2.16kg).

Preferably, the linear low density polyethylene in at least one or both of the outer layer(s) and/or in the core layer may preferably be a copolymer of ethylene and 1-hexene or 1-octene. Preferably, the linear low density polyethylene in at least one or both of the outer layer(s) and/or in the core layer may preferably be produced for example using metallocene catalyst.

Preferably, the density of the low density polyethylene (LDPE) ranges from 0.915 to 0.932 g/cm³, further preferred for example from 0.917 to 0.926 g/cm³. Preferably, the melt flow index as determined using ISO1133:2011 (190°C/2.16kg) for example ranges from 0.01 to 5 g/10min, preferably from 0.1 to 4 g/10min, further preferred from 0.5 to 3.5 g/10min, further preferred from 1 to 3 g/10min.

The LDPE applied in the present film may be produced by use of autoclave high pressure technology and by tubular reactor technology.

Preferably, the density of the HDPE ranges from 0.940 to 0.975 g/cm³, preferably 0.950 to 0.967 g/cm³, further preferred 0.955 to 0.965 g/cm³. Preferably, the melt flow index as determined using ISO1133:2011 (190°C/2.16kg) ranges from 0.1 to 4 g/10 min, for example from 0.3 to 3 g/10min, for example from 0.2 to 2 g/10min, for example from 0.5 to 1.5 g/10min.

The components of each layer according to the invention may preferably add up to 100 wt. % of the respective layer.

The thickness of multi-layer film of the invention may range for example from 4 to 75 µm, for example from 5 to 50 µm, especially for example from 7 to 25 µm. Not all layers in the multi-layer film of the invention need to have the same thickness. For example, one or more layers in the multi-layer film may be thicker than the other layers, especially for example to increase the stability of the production process.

For a multi-layer film according to the invention, the ratio of the thickness of an outer layer and/or both outer layer to the core layer may be between 1:1 and 1:4 especially for example between 1:2 and 1:3.

For example, each layer in the multi-layer film of the invention, especially the core layer may comprise an amount of additives of for example between 0 and 20 wt. %, preferably > 0 and < 20 wt. % or between 0.5 wt. % and < 20 wt. %, further preferred between 0.5 to 15 wt. %, further preferred between 0.5 to 12 wt. % or between 0.5 to 8 wt. % based on the total weight of the layer, wherein the sum of the polymer(s) and the additives may preferably be 100 wt. % based on the total weight of the layer.

Additives may thereby especially for example be anti-fog agent, such as for example a glycerol ester or a masterbatch of for example 20 wt. % of glycerol ester in HDPE, LDPE, LLDPE or a blend of two or more thereof, UV stabilizers, antistatic agents, slip/anti-block agents, fluor elastomers used as polymer processing aids and/or mixtures of two or more thereof.

The amount of additive, especially at least one anti-fog agent, in at least one or both of the outer layer(s) may be for example between 0 and 20 wt. %, preferably between > 0 and < 20 wt. % or between 0.5 and 20 wt. %, especially between 0.5 and 15 wt. %, further preferred between 0.5 to 12 wt. % or between 0.5 to 8 wt. % based on the total weight of the layer.

The amount of additive, especially at least one anti-fog agent, in the core layer may be for example between >0 and < 20 wt. %, preferably between 0.5 to 12 wt. % or between 0.5 to 8 wt. % based on the total weight of the layer.

Each layer may also contain appropriate amounts of other additives such as for example fillers, antioxidants, pigments and polymers depending on the specific use of the multi-layer film. Typically, additives may be present in a layer in an amount of 10 to 10000ppm, for example in an amount of 100 to 5000ppm based on the layer. Therefore, the invention also relates to a multi-layer film wherein one or more layers further comprise(s) one or more additives or other additives.

Multi-layer film for cling film applications according to the invention may comprise at least or exactly least three layers, with two outer layers, at least one core layer, preferably exactly one core layer, wherein at least one outer layer comprises between 73 wt. % and 99.5 wt. %, preferably between 73.5 and 99.4 wt. % based on the total weight of the respective layer, further preferred between 75 and 99.3 wt. % based on the total weight of the respective layer, further preferred between 76.5 and 99.2 wt. % based on the total weight of the respective layer, further preferred between 77 and 99 wt. % based on the total weight of the respective layer, further preferred between 77.5 and 98.5 wt. % based on the total weight of the respective layer of LLDPE, which preferably may be a copolymer of ethylene and 1-octene, with a melt flow index ranging from 0.1 to 6 g/10min, preferably from 0.5 to 5 g/10min, further preferred from 1 to 4 g/10min, further preferred from 2.5 to 3.5 g/10min, and between 0.5 wt. % and 7 wt. %, preferably between 0.6 and 6.5 wt. % based on the total weight of the respective layer, further preferred between 0.7 and 5 wt. % based on the total weight of the respective layer, further preferred between 0.8 and 3.5 wt. % based on the total weight of the respective layer, further preferred between 1 and 3 wt. % based on the total weight of the respective layer, further preferred between 1.5 and 2.5 wt. % based on the total weight of the respective layer of HDPE based on the total weight of the respective layer.

Multi-layer film for cling film applications according to the invention may comprise exactly least three layers, with two outer layers, at least one core layer, preferably exactly one core layer, wherein at least one outer layer comprises between 73.5 and 99.4 wt. % based on the total weight of the respective layer of LLDPE, which preferably may be a copolymer of ethylene and 1 -octene, with a melt flow index ranging from 0.5 to 5 g/1 0min and preferably between 0.6 and 6.5 wt. % based on the total weight of the respective layer of HDPE.

Multi-layer film for cling film applications according to the invention may comprise exactly least three layers, with two outer layers, at least one core layer, preferably exactly one core layer, wherein at least one outer layer comprises between 95 and 99.3 wt. % based on the total weight of the respective layer of LLDPE, which may be a copolymer of ethylene and 1-octene, with a melt flow index ranging from 0.5 to 5 g/10min and preferably between 0.7 and 5 wt. % based on the total weight of the respective layer of HDPE.

Multi-layer film for cling film applications according to the invention may comprise exactly least three layers, with two outer layers, at least one core layer, preferably exactly one core layer, wherein at least one outer layer comprises between 96.5 and 99.2 wt. % based on the total weight of the respective layer of LLDPE, which preferably may be a copolymer of ethylene and 1 -octene, with a melt flow index ranging from 0.5 to 5 g/10min and preferably between 0.8 and 4.5 wt. % based on the total weight of the respective layer of HDPE.

Multi-layer film for cling film applications according to the invention may comprise exactly least three layers, with two outer layers, at least one core layer, preferably exactly one core layer, wherein at least one outer layer comprises between 97 and 99 wt. % based on the total weight of the respective layer of LLDPE, which preferably may be a copolymer of ethylene and 1 -octene, with a melt flow index ranging from 0.5 to 5 g/10min and preferably between 1 and 3 wt. % based on the total weight of the respective layer of HDPE.

Multi-layer film for cling film applications according to the invention may comprise exactly least three layers, with two outer layers, at least one core layer, preferably exactly one core layer, wherein at least one outer layer comprises between 97.5 and 98.5 wt. % based on the total weight of the respective layer of LLDPE, which preferably may be a copolymer of ethylene and 1-octene, with a melt flow index ranging from 0.5 to 5 g/10min and preferably between 1.5 and 2.5 wt. % based on the total weight of the respective layer of HDPE.

Multi-layer film for cling film applications according to the invention may comprise exactly least three layers, with two outer layers, at least one core layer, preferably exactly one core layer, wherein at least one outer layer comprises between 73.5 and 98.9 wt. % based on the total weight of the respective layer of LLDPE, which preferably may be a copolymer of ethylene and 1-octene, with a melt flow index ranging from 0.5 to 5 g/10min, preferably between 0.6 and 6.5 wt. % based on the total weight of the respective layer of HDPE and between 0.5 and 20 wt. % of at least one anti-fog agent and wherein further the core layer comprises between 55 and 89.5 wt. % based on the total weight of the respective layer of at least one LLDPE, between 10 and 30 wt. % based on the total weight of the respective layer of at least one LDPE and between 0.5 and 15 wt. % of at least one anti-fog agent.

Multi-layer film for cling film applications according to the invention may comprise exactly least three layers, with two outer layers, at least one core layer, preferably exactly one core layer, wherein at least one outer layer comprises between 75 and 98.8 wt. % based on the total weight of the respective layer of LLDPE, which may be a copolymer of ethylene and 1-octene, with a melt flow index ranging from 0.5 to 5 g/10min, preferably between 0.7 and 5 wt. % based on the total weight of the respective layer of HDPE and between 0.5 and 20 wt. % of at least one anti-fog agent and wherein further the core layer comprises between 61 and 89 wt. % based on the total weight of the respective layer of at least one LLDPE, between 10.5 and 27 wt. % based on the total weight of the respective layer of at least one LDPE and between 0.5 and 12 wt. % of at least one anti-fog agent.

Multi-layer film for cling film applications according to the invention may comprise exactly least three layers, with two outer layers, at least one core layer, preferably exactly one core layer, wherein at least one outer layer comprises between 76.5 and 98.7 wt. % based on the total weight of the respective layer of LLDPE, which preferably may be a copolymer of ethylene and 1-octene, with a melt flow index ranging from 0.5 to 5 g/10min, preferably between 0.8 and 4.5 wt. % based on the total weight of the respective layer of HDPE and between 0.5 and 20 wt. % of at least one anti-fog agent and wherein further the core layer comprises between 62 and 85 wt. % based on the total weight of the respective layer of at least one LLDPE and between 14.5, 26 wt. % based on the total weight of the respective layer of at least one LDPE and between 0.5 and 12 wt. % of at least one anti-fog agent.

Multi-layer film for cling film applications according to the invention may comprise exactly least three layers, with two outer layers, at least one core layer, preferably exactly one core layer, wherein at least one outer layer comprises between 77 and 98.5 wt. % based on the total weight of the respective layer of LLDPE, which preferably may be a copolymer of ethylene and 1-octene, with a melt flow index ranging from 0.5 to 5 g/10min, preferably between 1 and 3 wt. % based on the total weight of the respective layer of HDPE and between 0.5 and 20 wt. % of at least one anti-fog agent and wherein further the core layer comprises between 64 and 77 wt. % based on the total weight of the respective layer of at least one LLDPE , between 13 and 27 wt. % based on the total weight of the respective layer of at least one LDPE and between 0.5 and 12 wt. % of at least one anti-fog agent.

The components of each layer according to the invention may preferably add up to 100 wt. % of the respective layer.

The present invention also concerns an article and/or packaging comprising a multi-layer film according to the invention.

The invention further concerns the use of the multi-layer film according to the invention for cling film applications.

The multi-layer films of the present invention may be prepared by any method known in the art. Multi-layer structures may be prepared for example by a blown film co-extrusion process, for example as disclosed in "Film Extrusion Manual", (TAPPI PRESS, 2005, ISBN 1 -59510-075-X, Editor Butler, pages 413-435).

For example, in the process of coextrusion, the various resins may be first melted in separate extruders and then brought together in a feed block. The feed block is a series of flow channels which bring the layers together into a uniform stream. From this feed block, this multi-layer material then flows through an adapter and out a film die. The blown film die may be an annular die. The die diameter may be a few centimeters to more than three meters across. The molten plastic is pulled upwards from the die by a pair of nip rolls high above the die (from for example 4 meters to more than 20 meters). Changing the speed of these nip rollers will change the gauge (wall thickness) of the film. Around the die an air-ring may be provided. The air exiting the air-ring cools the film as it travels upwards. In the center of the die there may be an air outlet from which compressed air can be forced into the center of the extruded circular profile, creating a bubble. This expands the extruded circular cross section by some ratio (a multiple of the die diameter). This ratio, called the "blow-up ratio" can be just a few percent to for example more than 300 percent of the original diameter. The nip rolls flatten the bubble into a double layer of film whose width (called the "layflat") is equal to ½ of the circumference of the bubble. This film may then be spooled or printed on, cut into shapes, and heat sealed into bags or other items.

It is further noted that the invention relates to all possible combinations of features described herein, preferred in particular are those combinations of features that are present in the claims.

It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention is now further explained by way of the following examples.

### Examples

The film samples were processed on a Polyrema multi-layer blown film line. The line is equipped with three Ø 50mm extruder with 25L/D barrier screws. The line was equipped with a Ø 200 mm die and a die gap of 2,5 mm. The line was equipped with dual lip cooling ring and IBC. In order to keep the influence of further parameters as low as possible, the overall throughput of approximately 50 kg/h and blow up ratio

(BUR) of 2,5 were kept constant. Barrel temperature profiles were ramped from 40°C at the feed section to 220°C at the die.
The overall film thickness was ∼14µm, the individual layer thickness ∼3/8/3 µm.

Two three layer film samples (A and B) with the following compositions (see Table 1) were prepared.

**Table 1**

| | Thickness (µm) | | |
|---|---|---|---|
| First outer | | **A**:82.5 wt. %, **B**: 85.5 wt. % and **C**: 87.5 wt. % | **A**:5 wt. % and **B**: 2wt. % and **C**: 0 wt. % |
| layer 1 | 3 | SABIC 8108 (LLDPE) | SABIC HDPE F04660 |
| Core | | 70 wt. % | 20 wt. % |
| layer 2 | 8 | SABIC 8118 (LLDPE) | SABIC 2102TX00 |
| Second outer | | **A**:82.5 wt. %, **B**: 85.5 wt. % and **C**: 87.5 wt. % | **A**:5 wt. % and **B**: 2wt. % and **C**: 0 wt. % |
| layer 3 | 3 | SABIC 8108 (LLDPE) | SABIC HDPE F04660 |

Composition C is reported as comparative example. The remaining to 100 wt. % for each layer in the compositions reported in Table 1 is made up by an anti-fog agent, namely Atmer 7340 by Croda, which is a glycerol ester in an amount of 20 wt. % in polyethylene.

For all samples (A, B and C), coefficients of friction between the inside and the outside layer were measured according to ASTM D1894-11 for five specimen. Results are reported in Table 2 below are averages of the five measurements.

**Table 2**

| | Sample | A | B | C |
|---|---|---|---|---|
| Coefficient of friction ASTM | | | | |
| D1894-11 | | | | |
| Inside - outside | | | | |
| Static friction coefficient x | - | 0.43 | 0.65 | 0.85 |
| Static friction coefficient st.dev | - | 0.06 | 0.11 | 0.07 |
| Dynamic friction coefficient x | - | 0.79 | 0.97 | 1.07 |
| Dynamic friction coefficient | - | 0.07 | 0.05 | 0.03 |
| st.dev | | | | |
| Number of specimens | | 5 | 5 | 5 |

One can see from the results above that both static and dynamic friction coefficients are reduced for samples A and B compared to comparative sample C. A further improvement can be seen for sample A over sample B. This may contribute to improve machinability.

## Claims

1. Multi-layer film for cling film applications comprising at least three layers, with two outer layers, at least one core layer, preferably exactly one core layer, wherein at least one outer layer comprises between 73 wt. % and 99.5 wt. % or between 73 wt. % and < 99.5 wt. % of linear low density polyethylene (LLDPE) based on the total weight of the respective layer and between 0.5 wt. % and 7 wt. % of high density polyethylene (HDPE) based on the total weight of the respective layer.

2. Multi-layer film according to claim 1, wherein the layer film comprise exactly three layers.

3. Multi-layer film according to claim 1 or claim 2, wherein the outer layers are identical and/or comprise the same linear low density polyethylene.

4. Multi-layer film according to any one of claims 1-3, wherein the amount additive, especially at least one anti-fog agent, in at least one or in both outer layer(s) and or in the core layer is between >0 and < 20 wt. % or between 0.5 and 20 wt. % or between 0.5 and < 20 wt. %, especially between 0.5 and 15 wt. %, further preferred between 0.5 to 12 wt. % or between 0.5 to 8 wt. % based on the total weight of the layer.

5. Multi-layer film according to any one of claims 1-4, wherein the amount of linear low density polyethylene in at least one or in both of the outer layer(s) is between 73 and 99.5 wt. % or 73 and 99 wt. % based on the total weight of the respective layer, between 73.5 and 98.9 wt. % based on the total weight of the respective layer, between 75 and 98.8 wt. % based on the total weight of the respective layer, between 76.5 and 98.7 wt. % based on the total weight of the respective layer, between 77 and 98.5 wt. % based on the total weight of the respective layer, more preferably between 77.5 and 98 wt. % based on the total weight of the respective layer.

6. Multilayer film according to any one of claims 1-5, wherein the amount of high density polyethylene in at least one or in both of the outer layer(s) is between 0.6 and 6.5 wt. % based on the total weight of the respective layer, between 0.7 and 5 wt. % based on the total weight of the respective layer, between 0.8 and 3.5 wt. % based on the total weight of the respective layer, between 1 and 3 wt. % based on the total weight of the respective layer, between 1.5 and 2.5 wt. % based on the total weight of the respective layer.

7. Multi-layer film according to any one of claims 1-6, wherein the melt flow index (measured according to ISO 1133:2011) of the linear low density polyethylene in at least one or in both of the outer layers ranges from 0.1 to 5 g/10min, preferably from 0.2 to 4 g/10min, further preferred from 0.3 to 3 g/10min, further preferred from 0.4 to 2 g/10min, further preferred from 0.5 to 1.5 g/10min.

8. Multi-layer film according to any one of claims 1-7, wherein the linear low density polyethylene in at least one or in both of the outer layers and/or in the core layer is a copolymer of ethylene and 1-octene.

9. Multi-layer film according to any one of claims 1-8, wherein the linear low density polyethylene in at least one or both of the outer layer(s) or in the core layer has a density (measured according to ISO 1872-2) between 0.850 g/cm³ and 0.945 g/ cm³, preferably between 0.900 to 0.934 g/cm³, further preferred between 0.905 to 0.920 g/cm³.

10. Multi-layer film according to any one of claims 1-9, wherein a core layer of a multi-layer film according to the invention may comprise at least one polyolefin and/or blends of two or more of LLDPE, low density polyethylene (LDPE) or HDPE, especially LLDPE and LDPE.

11. Multi-layer film according to any one of claims 1-10, wherein the melt flow index as determined using ISO1133:2011 (190°C/2.16kg) of the HDPE ranges from 0.1 to 4 g/10 min, preferably from 0.3 to 3 g/10min, for example from 0.2 to 2 g/10min, further preferred from 0.5 to 1.5 g/10min.

12. Multi-layer film according to any one of claims 1-11, wherein the core layer comprises between 10 and 30 wt. % based on the total weight of the respective layer, preferably between 10.5 and 27 wt. % based on the total weight of the respective layer, preferably between 14.5 and 26 wt. % based on the total weight of the respective layer, further preferred between 13 and 27 wt. % based on the total weight of the respective layer, further preferred between 15 and 25 wt. % based on the total weight of the respective layer of LDPE.

13. Multi-layer film according to any one of the claims 1-12, wherein the core layer comprises between > 50 and 89.5 wt. % based on the total weight of the respective layer, preferably between 55 and 89.5 wt. % based on the total weight of the respective layer, preferably between 61 and 89 wt. % based on the total weight of the respective layer, further preferred between 62 and 85 wt. % based on the total weight of the respective layer, further preferred between 64 and 77 wt. % based on the total weight of the respective layer, further preferred between 65 and 75 wt. % based on the total weight of the respective layer of LLDPE.

14. Article and/or packaging comprising a multi-layer film according to any one of claims 1-12.

15. Use of the multi-layer film according to any one of claims 1-12 for cling film applications.

## Patentansprüche

1. Mehrschichtfolie für Frischhaltefolienanwendungen, die mindestens drei Schichten, mit zwei Außenschichten, mindestens einer Kernschicht, vorzugsweise genau einer Kernschicht umfasst, wobei mindestens eine äußere Schicht Folgendes umfasst: zwischen 73 Gew.-% und 99,5 Gew.-% oder zwischen 73 Gew.-% und < 99,5 Gew.-% lineares Polyethylen niedriger Dichte (Linear Low Density PolyEthylene, LLDPE) bezogen auf das Gesamtgewicht der jeweiligen Schicht und zwischen 0,5 Gew.-% und 7 Gew.-% Polyethylen hoher Dichte (High Density PolyEthylene, HDPE) bezogen auf das Gesamtgewicht der jeweiligen Schicht.

2. Mehrschichtfolie nach Anspruch 1, wobei die Schichtfolie genau drei Schichten umfasst.

3. Mehrschichtfolie nach Anspruch 1 oder Anspruch 2, wobei die äußeren Schichten identisch sind und/oder das gleiche lineare Polyethylen niedriger Dichte umfassen.

4. Mehrschichtfolie nach einem der Ansprüche 1 bis 3, wobei die Menge Additiv, insbesondere mindestens ein Antibeschlagmittel, in mindestens einer oder in beiden Außenschichten und/oder in der Kernschicht zwischen > 0 und < 20 Gew.-% oder zwischen 0,5 und 20 Gew.-% oder zwischen 0,5 und < 20 Gew.-%, besonders zwischen 0,5 und 15 Gew.-%, weiter bevorzugt zwischen 0,5 bis 12 Gew.-% oder zwischen 0,5 und 8 Gew.-% bezogen auf das Gesamtgewicht der Schicht beträgt.

5. Mehrschichtfolie nach einem der Ansprüche 1 bis 4, wobei die Menge an linearem Polyethylen niedriger Dichte in mindestens einer oder beiden der äußeren Schichten zwischen 73 und 99,5 Gew.-% oder 73 und 99 Gew.-% bezogen auf das Gesamtgewicht der jeweiligen Schicht, zwischen 73,5 und 98,9 Gew.-% bezogen auf das Gesamtgewicht der jeweiligen Schicht, zwischen 75 und 98,8 Gew.-% bezogen auf das Gesamtgewicht der jeweiligen Schicht, zwischen 76,5 und 98,7 Gew.-% bezogen auf das Gesamtgewicht der jeweiligen Schicht, zwischen 77 und 98,5 Gew.-% bezogen auf das Gesamtgewicht der jeweiligen Schicht, bevorzugter zwischen 77,5 und 98 Gew.-% bezogen auf das Gesamtgewicht der jeweiligen Schicht beträgt.

6. Mehrschichtfolie nach einem der Ansprüche 1 bis 5, wobei die Menge an Polyethylen hoher Dichte in mindestens einer oder beiden der äußeren Schichten zwischen 0,6 und 6,5 Gew.-% bezogen auf das Gesamtgewicht der jeweiligen Schicht, zwischen 0,7 und 5 Gew.-% bezogen auf das Gesamtgewicht der jeweiligen Schicht, zwischen 0,8 und 3,5 Gew.-% bezogen auf das Gesamtgewicht der jeweiligen Schicht, zwischen 1 und 3 Gew.-% bezogen auf das Gesamtgewicht der jeweiligen Schicht, zwischen 1,5 und 2,5 Gew.-% bezogen auf das Gesamtgewicht der jeweiligen Schicht beträgt.

7. Mehrschichtfolie nach einem der Ansprüche 1 bis 6, wobei der Schmelzindex (gemessen gemäß ISO 1133:2011) des linearen Polyethylens niedriger Dichte in mindestens einer oder in beiden der äußeren Schichten von 0,1 bis 5 g/10 min, vorzugsweise von 0,2 bis 4 g/10 min, weiter bevorzugt von 0,3 bis 3 g/10 min, weiter bevorzugt von 0,4 bis 2 g/10 min, weiter bevorzugt von 0,5 bis 1,5 g/10 min reicht.

8. Mehrschichtfolie nach einem der Ansprüche 1 bis 7, wobei das lineare Polyethylen niedriger Dichte in mindestens einer oder in beiden der äußeren Schichten und/oder in der Kernschicht ein Copolymer aus Ethylen und 1-Octen ist.

9. Mehrschichtfolie nach einem der Ansprüche 1 bis 8, wobei das lineare Polyethylen niedriger Dichte in mindestens einer oder beiden der äußeren Schichten oder in der Kernschicht eine Dichte (gemessen gemäß ISO 1872-2) zwischen 0,850 g/cm³ und 0,945 g/cm³, vorzugsweise zwischen 0,900 und 0,934 g/cm³, weiter bevorzugt zwischen 0,905 und 0,920 g/cm³ aufweist.

10. Mehrschichtfolie nach einem der Ansprüche 1 bis 9, wobei eine Kernschicht einer erfindungsgemäßen Mehrschichtfolie mindestens ein Polyolefin und/oder Mischungen aus zwei oder mehr von LLDPE, Polyethylen niedriger Dichte (Low Density PolyEthylene, LDPE) oder HDPE, insbesondere LLDPE und LDPE, umfassen kann.

11. Mehrschichtfolie nach einem der Ansprüche 1 bis 10, wobei der Schmelzindex von HDPE, bestimmt unter Verwendung von ISO 1133:2011 (190° C/2,16 kg), im Bereich von 0,1 bis 4 g/10 min, vorzugsweise von 0,3 bis 3 g/10 min, beispielsweise von 0,2 bis 2 g/10 min, weiter bevorzugt von 0,5 bis 1,5 g/10 min liegt.

12. Mehrschichtfolie nach einem der Ansprüche 1 bis 11, wobei die Kernschicht Folgendes umfasst: zwischen 10 und 30 Gew.-% bezogen auf das Gesamtgewicht der jeweiligen Schicht, vorzugsweise zwischen 10,5 und 27 Gew.-% bezogen auf das Gesamtgewicht der jeweiligen Schicht, vorzugsweise zwischen 14,5 und 26 Gew.-% bezogen auf das Gesamtgewicht der jeweiligen Schicht, weiter bevorzugt zwischen 13 und 27 Gew.-% bezogen auf das Gesamtgewicht der jeweiligen Schicht, weiter bevorzugt zwischen 15 und 25 Gew.-% bezogen auf das Gesamtgewicht der jeweiligen LDPE-Schicht.

13. Mehrschichtfolie nach einem der Ansprüche 1 bis 12, wobei die Kernschicht Folgendes umfasst: zwischen > 50 und 89,5 Gew.-% bezogen auf das Gesamtgewicht der jeweiligen Schicht, vorzugsweise zwischen 55 und 89,5 Gew.-% bezogen auf das Gesamtgewicht der jeweiligen Schicht, vorzugsweise zwischen 61 und 89 Gew.-% bezogen auf das Gesamtgewicht der jeweiligen Schicht, weiter bevorzugt zwischen 62 und 85 Gew.-% bezogen auf das Gesamtgewicht der jeweiligen Schicht, weiter bevorzugt zwischen 64 und 77 Gew.-% bezogen auf das Gesamtgewicht der jeweiligen Schicht, weiter bevorzugt zwischen 65 und 75 Gew.-% bezogen auf das Gesamtgewicht der jeweiligen LLDPE-Schicht.

14. Artikel und/oder Verpackung, der/die eine Mehrschichtfolie nach einem der Ansprüche 1 bis 12 umfasst.

15. Verwendung der Mehrschichtfolie nach einem der Ansprüche 1 bis 12 für Frischhaltefolienanwendungen.

## Revendications

1. Film multicouche pour des applications de film étirable comprenant au moins trois couches, avec deux couches externes, au moins une couche centrale, de préférence exactement une couche centrale, dans laquelle au moins une couche externe comprend entre 73 % en poids et 99,5 % en poids ou entre 73 % en poids et < 99,5 % en poids de polyéthylène linéaire basse densité (LLDPE) sur la base du poids total de la couche respective et entre 0,5 % en poids et 7 % en poids de polyéthylène haute densité (HDPE) sur la base du poids total de la couche respective.

2. Film multicouche selon la revendication 1, dans lequel le film en couches comprend exactement trois couches.

3. Film multicouche selon la revendication 1 ou 2, dans lequel les couches externes sont identiques et / ou comprennent le même polyéthylène linéaire basse densité.

4. Film multicouche selon l'une quelconque des revendications 1 à 3, dans lequel la quantité d'additif, en particulier au moins un agent antibuée, dans au moins une ou dans les deux couches externes et ou dans la couche centrale est compris entre > 0 et < 20 % en poids ou entre 0,5 et 20 % en poids ou entre 0,5 et < 20 % en poids, en particulier entre 0,5 et 15 % en poids, encore préféré entre 0,5 et 12 % en poids ou entre 0,5 et 8 % en poids sur la base du poids total de la couche.

5. Film multicouche selon l'une quelconque des revendications 1 à 4, dans lequel la quantité de polyéthylène linéaire basse densité dans au moins une ou dans les deux couches extérieures est comprise entre 73 et 99,5 % en poids ou 73 et 99 % en poids sur la base du poids total de la couche respective, entre 73,5 et 98,9 % en poids sur la base du poids total de la couche respective, entre 75 et 98,8 % en poids sur la base du poids total de la couche respective, entre 76,5 et 98,7 % en poids sur la base du poids total de la couche respective, entre 77 et 98,5 % en poids sur la base du poids total de la couche respective, plus préférablement entre 77,5 et 98 % en poids sur la base du poids total de la couche respective.

6. Film multicouche selon l'une quelconque des revendications 1 à 5, dans lequel la quantité de polyéthylène haute densité dans au moins une ou dans les deux couches externes est comprise entre 0,6 et 6,5 % en poids sur la base du poids total de la couche respective, entre 0,7 et 5 % en poids sur la base du poids total de la couche respective, entre 0,8 et 3,5 % en poids sur la base du poids total de la couche respective, entre 1 et 3 % en poids sur la base du poids total de la couche respective, entre 1,5 et 2,5 % en poids sur la base du poids total de la couche respective.

7. Film multicouche selon l'une quelconque des revendications 1 à 6, dans lequel l'indice de fluidité à chaud (mesuré selon la norme ISO 1133 : 2011) du polyéthylène linéaire basse densité dans au moins une ou dans les deux couches externes est compris entre 0,1 à 5 g/10 min, de préférence de 0,2 à 4 g/10 min, en outre préféré de 0,3 à 3 g/10 min, davantage préféré de 0,4 à 2 g/10 min, davantage préféré de 0,5 à 1,5 g/10 min.

8. Film multicouche selon l'une quelconque des revendications 1 à 7, dans lequel le polyéthylène linéaire basse densité dans au moins une ou dans les deux couches externes et / ou dans la couche centrale est un copolymère d'éthylène et de 1-octène.

9. Film multicouche selon l'une quelconque des revendications 1 à 8, dans lequel le polyéthylène linéaire basse densité dans au moins une ou les deux couches externes ou dans la couche centrale a une densité (mesurée selon ISO 1872-2) entre 0,850 g/cm³ et 0,945 g/cm³, préférablement entre 0,900 et 0,934 g/cm³, encore plus préférablement entre 0,905 et 0,920 g/cm³.

10. Film multicouche selon l'une quelconque des revendications 1 à 9, dans lequel une couche centrale d'un film multicouche selon l'invention peut comprendre au moins une polyoléfine et / ou des mélanges de deux ou plusieurs LLDPE, polyéthylène basse densité (LDPE) ou HDPE, en particulier LLDPE et LDPE.

11. Film multicouche selon l'une quelconque des revendications 1 à 10, dans lequel l'indice de fluidité à chaud tel que déterminé en utilisant la norme ISO 1133 : 2011 (190 °C/2, 16 kg) du HDPE est compris entre 0,1 et 4 g/10 min, de préférence de 0,3 à 3 g/10 min, par exemple de 0,2 à 2 g/10 min, davantage de préférence de 0,5 à 1,5 g/10 min.

12. Film multicouche selon l'une quelconque des revendications 1 à 11, dans lequel la couche centrale comprend entre 10 et 30 % en poids sur la base du poids total de la couche respective, de préférence entre 10,5 et 27 % en poids sur la base du poids total de la couche respective, de préférence entre 14,5 et 26 % en poids sur la base du poids total de la couche respective, encore plus de préférence entre 13 et 27 % en poids sur la base du poids total de la couche respective, encore davantage de préférence entre 15 et 25 % en poids sur la base du poids total de la couche respective de LDPE.

13. Film multicouche selon l'une quelconque des revendications 1 à 12, dans lequel la couche centrale comprend entre > 50 et 89,5 % en poids sur la base du poids total de la couche respective, de préférence entre 55 et 89,5 % en poids sur la base du poids total de la couche respective, de préférence entre 61 et 89 % en poids sur la base du poids total de la couche respective, davantage de préférence entre 62 et 85 % en poids sur la base du poids total de la couche respective, davantage de préférence entre 64 et 77 % en poids sur la base du poids total de la couche respective, davantage de préférence entre 65 et 75 % en poids sur la base du poids total de la couche respective de LLDPE.

14. Article et / ou emballage comprenant un film multicouche selon l'une quelconque des revendications 1 à 12.

15. Utilisation du film multicouche selon l'une quelconque des revendications 1 à 12 pour des applications de film étirable.
